# EUROPÄISCHE PATENTSCHRIFT

(11) **EP 2 376 823 B1**
(45) Veröffentlichungstag und Bekanntmachung des Hinweises auf die Patenterteilung: **23.01.2013**
(21) Anmeldenummer: 09777549.8
(22) Anmeldetag: 30.07.2009
(51) Int. Cl.: F16L 25/01, F16L 37/53

(54) **KUPPLUNG MIT ELEKTRISCHEN KONTAKTEN FÜR EIN ÖL-LUFT-GEMISCH**
COUPLING WITH ELECTRIC CONTACTS FOR AN OIL/AIR MIXTURE
ACCOUPLEMENT AVEC DES CONTACTS ÉLECTRIQUES POUR UN MÉLANGE HUILE-AIR

(30) Priorität: 30.07.2008 DE 102008035482; 02.05.2009 DE 102009019783
(43) Veröffentlichungstag der Anmeldung: 19.10.2011
(73) Patentinhaber: SMS Siemag AG, 40237 Düsseldorf (DE)
(72) Erfinder: ALLERDINGS, Arthur, 57482 Wenden (DE)
(74) Vertreter: Klüppel, Walter
(86) Internationale Anmeldenummer: PCT/EP2009/005527
(87) Internationale Veröffentlichungsnummer: WO 2010/012467

(56) Entgegenhaltungen:
- DE-U1- 8 532 752
- GB-A- 1 351 483

## Beschreibung

### Gebiet der Erfindung

Die Erfindung betrifft eine Kupplung für ein Öl-Luft-Gemisch im Rahmen einer Öl-Luft-Schmierung und deren Verwendung in einem Verfahren, wobei die Kupplung zusätzlich elektrische Kontakte besitzt, so dass die Kupplung neben der Übertragung des Öl-Luft-Gemischs auch über elektrische Anschlüsse elektrischen Strom leiten kann. Insbesondere kann eine solche Kupplung in einer Plattenkonstruktion in einem Walzgerüst verwendet werden.

### Stand der Technik

Bisher sind aus dem Stand der Technik lediglich Kupplungen für eine Öl-Luft-Schmierung bzw. ein Öl-Luft-Gemisch bekannt, die lediglich die Übertragung des Öl-Luft-Gemischs zulassen.

Insbesondere im Bereich der Walzwerktechnik, werden zum Beispiel Lager von Walzen immer häufiger mit einer Öl-Luft-Schmierung anstatt einer Ölschmierung betrieben. Dies geschieht vor allem wegen der geringeren benötigten Ölmengen, zudem entfällt bei der Öl-Luft-Schmierung der Rücklauf. Im Falle der Ölschmierung kann durch Messung der Rücklauftemperatur des Öls der Zustand der Lager und deren Schmierung überwacht werden. Im Falle der Öl-Luft-Schmierung ist allerdings die Temperaturüberwachung des Rücklaufs nicht mehr möglich, weil ein solcher nicht existiert, daher müssen Temperaturgeber direkt in die Einbaustücke der Walzen verbaut werden, die jedoch eine eigene Strom- bzw. Signalübertragungsleitung benötigen. Werden in die Lager der Walzen Temperatur- oder Vibrationsgeber eingebaut, dann müssen diese über Stecker zuerst vor dem Walzenwechsel per Hand entkuppelt werden und nach dem Walzenwechsel wieder per Hand gekuppelt werden. Abgesehen von der dadurch entstehenden Mehrarbeit, kann es passieren, dass das erneute Verbinden der Stecker nicht durchgeführt wird und dadurch möglicherweise ein schwerer Schaden an den Walzenlagern auftritt, der durch eine Überwachung der Vibrationen und / oder der Temperatur der Walzenlager hätte vermieden werden können. Der Anschluss der Öl-Luft-Kupplung erfolgt bisher über eine Kupplung in einer Plattenkonstruktion. Wird allerdings nun auch eine weitere Kupplung für eine elektrische Leitung in der Plattenkonstruktion vorgesehen, erschwert dies ebenso das Kuppeln und Entkuppeln beim regelmäßig durchzuführenden Walzenwechsel. Zudem wird ein automatisches Kuppeln und Entkuppeln erschwert.

Das deutsche Gebrauchsmuster DE 85 32 752 U beschreibt eine Kupplungsvorrichtung für Druckmittelleitungen mit Öl-Luft-Schmierung an Walzgerüsten. Diese Kupplungsvorrichtung ermöglicht es jedoch nicht, mit der Schmiermittelkupplung auch gleichzeitig elektrische Ströme zu übertragen. Vielmehr sieht dieses Dokument nur eine visuelle Überwachung der Situation der Walzen vor.

Es besteht demnach die technische Aufgabe, die oben genannten Nachteile zu vermeiden.

### Offenbarung der Erfindung

Die obige Aufgabe wird durch die im Folgenden beschriebene Erfindung gelöst, welche folgendes umfasst:
Eine Kupplung für eine Öl-Luft-Schmierung, wobei die Kupplung eine erste Kupplungshälfte mit einem ersten Gehäuse und einer ersten Schlauchverbindung aufweist sowie eine zweite Kupplungshälfte mit einem zweiten Gehäuse und einer zweiten Schlauchverbindung, wobei beide Kupplungshälften miteinander gekoppelt werden können, so dass ein Öl-Luft-Gemisch, das durch die erste Schlauchverbindung strömt, durch die gekuppelten Kupplungshälften in die zweite Schlauchverbindung hineinströmt, die dadurch gekennzeichnet ist, dass zusätzlich ein erster elektrischer Anschluss in der ersten Kupplungshälfte angeordnet ist und ein zweiter elektrischer Anschluss in der zweiten Kupplungshälfte angeordnet ist, die bei Kuppeln der ersten und der zweiten Kupplungshälfte ebenfalls gekuppelt werden, so dass ein elektrischer Strom durch die gekuppelten elektrischen Anschlüsse fließen kann.

Der elektrische Strom, zum Beispiel eines Temperaturgebers oder eines anderen Sensors, kann somit auch durch die Öl-Luft-Kupplung übertragen werden. Es wird nur noch eine Kupplung benötigt, die auch wahlweise im Rahmen eines automatischen Walzenwechsels verwendet werden kann.

In einer weiteren bevorzugten Ausführungsform ist jeder elektrische Anschluss konzentrisch innerhalb des Gehäuses der jeweiligen Kupplungshälfte angeordnet.

In einer weiteren bevorzugten Ausführungsform ist innerhalb des Gehäuses einer der Kupplungshälften ein in Kupplungsrichtung bewegliches Element vorhanden, das mit dem jeweiligen elektrischen Anschluss verbunden ist und wobei das bewegliche Element im Fall der entkuppelten Kupplung das Gehäuse der Kupplungshälfte in Kupplungsrichtung abdichtet, so dass kein Öl-Luft-Gemisch aus der Kupplungshälfte herausströmen kann.

In einer weiteren bevorzugten Ausführungsform sind die elektrischen Anschlüsse in Kupplungsrichtung so angeordnet, dass die elektrischen Anschlüsse beim Kuppeln der beiden Kupplungshälften zuerst gekuppelt werden und erst danach das bewegliche und mit dem jeweiligen elektrischen Anschluss verbundene Element eine Passage für das Öl-Luft-Gemisch öffnet.

In einer weiteren bevorzugten Ausführungsform sind die elektrischen Anschlüsse nach deren Kuppeln abgedichtet wobei das bewegliche Element erst danach die Passage für das Öl-Luft-Gemisch öffnet.

Eine solche bevorzugte Ausführungsform hat den Vorteil, dass die elektrischen Anschlüsse vor dem Öl-Luft-Gemisch geschützt sind und nicht mit diesem in Kontakt kommen können.

In einer weiteren bevorzugten Ausführungsform ist in der zweiten Kupplungshälfte ein zweites bewegliches Element vorgesehen, welches im Fall der entkuppelten Kupplung das Gehäuse der zweiten Kupplungshälfte in Kupplungsrichtung abdichtet, so dass kein Öl-Luft-Gemisch aus der Kupplungshälfte herausströmen kann.

In einer weiteren bevorzugten Ausführungsform bewegt das Gehäuse der ersten Kupplungshälfte, beim Kuppeln der ersten und der zweiten Kupplungshälfte, das zweite bewegliche Element der zweiten Kupplungshälfte in Kupplungsrichtung, so dass sich eine Passage für das Öl-Luft-Gemisch öffnet.

In einer weiteren bevorzugten Ausführungsform ist die gekuppelte Kupplung um ihre Längsachse drehbar.
Dieses Merkmal vereinfacht den Kupplungs- bzw. den Entkuppelvorgang, da keine ausgezeichnete radiale Vorzugsrichtung bezüglich der Kupplungsmechanik existiert.

In einer weiteren bevorzugten Ausführungsform ist zwischen den elektrischen Anschlüssen und der Innenwand der Gehäuse der Kupplungshälften eine Passage für das Öl-Luft-Gemisch vorhanden.

In einer weiteren bevorzugten Ausführungsform ist mindestens ein elektrischer Anschluss in Längsrichtung bewegbar.

In einer weiteren bevorzugten Ausführungsform ist mindestens einer der elektrischen Anschlüsse durch eine Feder in Kupplungsrichtung gespannt, die durch einen Steg, der sich im Wesentlichen senkrecht zur Gehäuseinnenwand erstreckt, gehalten wird.

In einer weiteren bevorzugten Ausführungsform weist der Steg mindestens eine Öffnung für das Öl-Luft-Gemisch auf.

In einer weiteren bevorzugten Ausführungsform sind die elektrischen Anschlüsse mindestens einer Kupplungshälfte in Kupplungsrichtung kürzer ausgebildet als die Gehäuse der Kupplungshälften, so dass die Gehäuse der Kupplungshälften miteinander kuppeln bevor die elektrischen Anschlüsse kuppeln.

Eine solche vorzugsweise Anordnung der elektrischen Anschlüsse hat den Vorteil, dass die elektrischen Kontakte nicht durch einen von der Kupplungsrichtung leicht abweichenden Kuppelvorgang verbogen, abgebrochen oder anderweitig beschädigt werden.

In einer weiteren bevorzugten Ausführungsform ist der erste elektrische Anschluss innerhalb der ersten Kupplungshälfte als Stecker ausgebildet und der zweite elektrische Anschluss innerhalb der zweiten Kupplungshälfte als eine Buchse ausgebildet.

In einer weiteren bevorzugten Ausführungsform werden elektrische Leitungen im Wesentlichen parallel zu den Schlauchverbindungen aus der Rückseite der Kupplungsgehäuse herausgeführt.

Ein solches vorzugsweises Merkmal bewirkt, dass das Kuppeln und Entkuppeln der Kupplung weiter vereinfacht wird, da die elektrischen Kabel lediglich in Kupplungsrichtung Platz benötigen.

In einer weiteren bevorzugten Ausführungsform werden die elektrischen Leitungen über eine Kabelverschraubung durch die Gehäuse geführt oder sind mit den Gehäusen vergossen.

Die Erfindung umfasst zusätzlich ein Verfahren zur simultanen Überwachung der Schmierung und Übertragung von Schmiermitteln von Walzen in einer Walzstraße, wobei Walzenzapfen der Walzen in einem Lager, das in einem Einbaustück angeordnet ist, gelagert sind, wobei das Verfahren dadurch gekennzeichnet ist, dass in dem Einbaustück eine Bohrung vorgesehen wird und in dieser Bohrung ein Vibrations- und / oder Temperatursensor angeordnet wird, der über ein Kabel mit einer erfindungsgemäßen Kupplung verbunden ist, so dass jeweils das Kuppeln, das Übertragen und das Entkuppeln des Öl-Luft-Gemischs und der elektrischen Ströme durch die Kupplung erfolgt.

Dieses Verfahren erlaubt mit der ebenso beanspruchten Kupplung die gleichzeitige Übertragung der elektrischen Ströme oder Signale und der Schmiermittel. Durch die Anordnung der Geber in den Einbaustücken ist die Überwachung der Walzenlager nun immer möglich, wenn die Kupplung sich im gekuppelten Zustand befindet. Das Kuppeln und Entkuppeln aller Leitungen kann in einem Vorgang per Hand oder insbesondere automatisch erfolgen.

### Kurze Beschreibung der Figuren

Im Folgenden werden kurz die Figuren der Ausführungsbeispiele beschrieben, wobei
- Figur 1: eine Schnittzeichnung einer Walze einer Walzstraße zeigt, in deren Einbaustück der Einbauort eines Sensors gezeigt ist und in
- Figur 2: eine Schnittzeichnung einer gekuppelten Kupplung eines ersten Ausführungsbeispiels gemäß der Erfindung gezeigt ist und in
- Figur 3: eine Schnittzeichnung einer nicht-gekuppelten Kupplung nach einem weiteren Ausführungsbeispiel gemäß der Erfindung gezeigt ist und in
- Figur 4: eine Schnittzeichnung der gekuppelten Kupplung aus Figur 4 dargestellt ist.

### Detaillierte Beschreibung der Ausführungsbeispiele

Allgemein ist zunächst darauf hingewiesen, dass die Ausdrücke "erste" und "zweite" in der folgenden Beschreibung nur der Klarheit halber verwendet werden und andere mögliche Formulierungen oder Reihenfolgen der Benennung dadurch nicht ausgeschlossen sind.

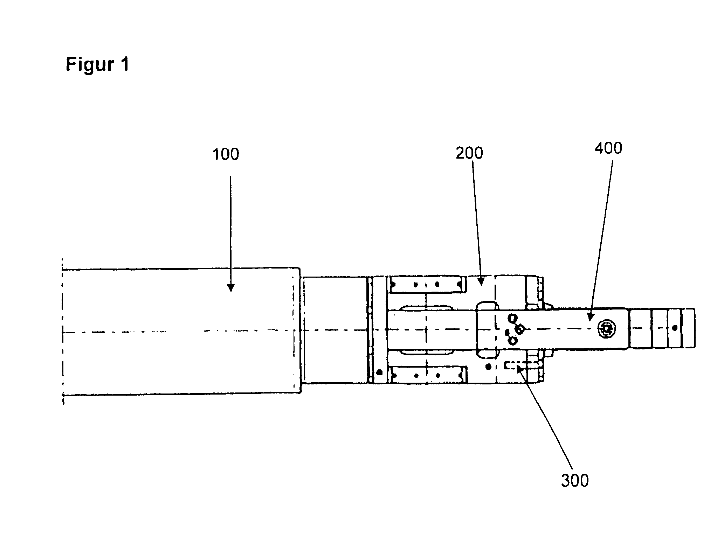

In Figur 1 ist der Schnitt einer Walze 100 einer Walzstraße gezeigt. Die Walze 100 weist einen Walzenzapfen 400 auf, der in einem Walzenlager, das sich in einem feststehenden Einbaustück 200 befindet, rotieren kann. In der Figur ist lediglich schematisch eine Hälfte einer Walze gezeigt. Im Einbaustück 200 ist eine Bohrung 300 angeordnet, in die ein Sensor (nicht gezeigt) eingebaut werden kann. Der elektrische Anschluss eines solchen Sensors kann dann mit einer Kupplung, z. B. in der Plattenkonstruktion des Walzgerüsts, verbunden werden. Bei der Walze 100 kann es sich zum Beispiel um eine Arbeitswalze, eine Stützwalze oder eine Zwischenwalze handeln. Demzufolge werden im Einbaustück 200 Bohrungen 300 für Sensoren vorgesehen, insbesondere für Schwingungs- (Vibrations-) oder Temperatursensoren. In diese Bohrungen 300 werden Sensoren eingesetzt, welche mit einer automatischen oder handgekuppelten Kupplung für eine Öl-Luft-Schmierung oder eine andere Schmierung oder Versorgung, die mit elektrischen Anschlüssen versehen ist, verbunden werden. Die Bohrung 300 für die genannten Sensoren erfolgt vorzugsweise parallel zur Walzenachse, kann aber auch einen Winkel zur Walzenachse aufweisen. Ein in diese Bohrung verbauter Sensor kann vorzugsweise mittels eines Kabels mit einer Kupplung gemäß der Erfindung verbunden werden, so dass eine gleichzeitige Übertragung der Schmiermittel und der elektrischen Ströme des Gebers möglich ist. Es ist zudem möglich, dass eine Kupplungshälfte direkt in das Einbaustück 200 verbaut wird, so dass kein weiteres freiliegendes Kabel mehr zwischen Kupplung und Geber benötigt wird. Die Anordnung kann dabei äquivalent zu der eines Sensors erfolgen.

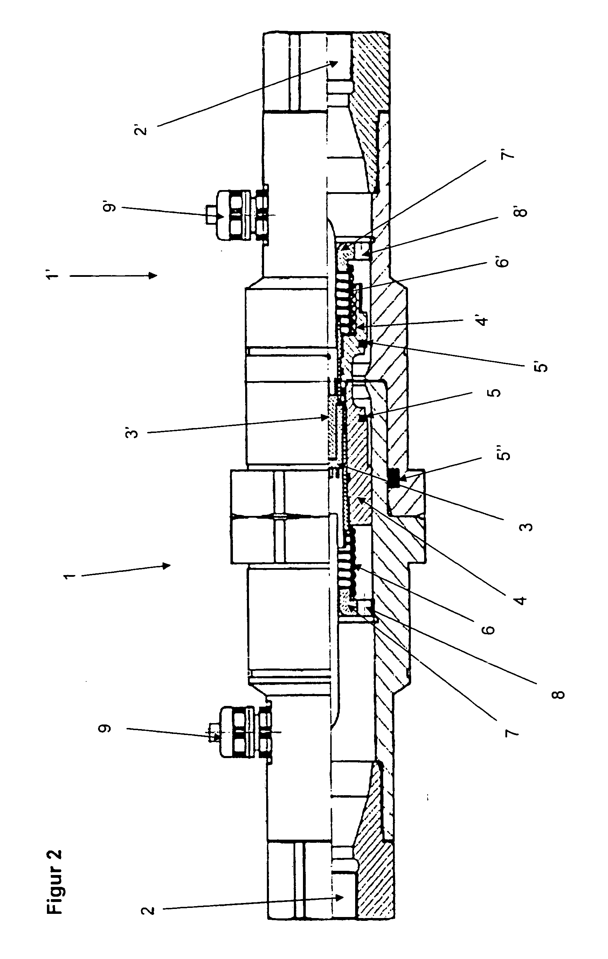

Figur 2 zeigt ein Ausführungsbeispiel einer gekuppelten Kupplung gemäß der Erfindung. Die Kupplung besitzt eine erste Kupplungshälfte 1 und eine zweite Kupplungshälfte 1', die jeweils Anschlüsse 2, 2' für ein Öl-Luft-Gemisch enthalten. Im Innern der Kupplung befindet sich in der jeweiligen Kupplungshälfte 1, 1' koaxial, und damit in Kupplungsrichtung, ein elektrischer Anschluss 3, 3'. Diese Anschlüsse sind in diesem Beispiel als Stecker 3' und als Buchse 3 ausgebildet. Mit diesen elektrischen Anschlüssen 3, 3' ist jeweils ein bewegliches Element 4, 4' verbunden, das vor allem zur Abdichtung der entkuppelten Kupplung dient. Dieses bewegliche Element 4, 4' ist in Kupplungsrichtung mit dem elektrischen Anschluss 3, 3' innerhalb des Gehäuses der jeweiligen Kupplungshälfte 1, 1' beweglich. Dieses bewegliche Element 4, 4' hat im Wesentlichen eine dem Inneren des Kupplungsgehäuses angepasste äußere Form. Das bewegliche Element 4, 4' ist zudem mit Kanälen bzw. Öffnungen oder Passagen für das Öl-Luft-Gemisch versehen. Insbesondere ist das jeweilige bewegliche Element 4, 4' und der jeweilige elektrische Anschluss 3, 3' durch eine Feder 6, 6', die in Kupplungsrichtung koaxial angeordnet ist gespannt bzw. gefedert. Die Feder 6, 6' ist dabei jeweils auf einen Steg 7, 7' gestützt, der sich senkrecht zum Gehäuse der jeweiligen Kupplungshälfte 1, 1' erstreckt. Der Steg 7, 7' weist eine oder mehrere Öffnungen oder Passagen 8, 8' in Kupplungsrichtung auf, so dass durch diesen ein Öl-Luft-Gemisch hindurch strömen kann. Dichtung 5" dient dazu, die beiden Hälften der Gehäuse im gekoppelten Zustand abzudichten. Die Dichtung 5, 5' dient dazu, den Raum zwischen dem jeweiligen beweglichen Element 4, 4' und dem Gehäuse der jeweiligen Kupplungshälfte 1, 1' im entkuppelten Zustand abzudichten. Dichtung 5"' dient zur Abdichtung der elektrischen Anschlüsse 3, 3' im gekuppelten Zustand. Elektrische Leitungen bzw. Kabel werden von dem jeweiligen elektrischen Anschluss 3, 3' axial in Richtung des jeweiligen Anschlusses für das Öl-Luh-Gemisch 2, 2' geführt und dann senkrecht zur Kupplungsrichtung durch Kabelverschraubungen 9, 9' aus den Kupplungsgehäusen herausgeführt, die das Gehäuse abdichten können. Wahlweise ist es auch möglich, die Kabel mit den Gehäusen zu vergießen. Außerdem ist es auch möglich das jeweilige Kabel über eine Öffnung aus dem jeweiligen Gehäuse herauszuführen, die im Wesentlichen parallel zur Kupplungsrichtung liegt oder zumindest eine solche Richtungskomponente besitzt. Die Kabel sind im Allgemeinen flexibel bzw. beweglich, damit sie sich beim Kuppel- bzw. Entkuppelvorgang mit dem elektrischen Anschluss 3, 3' bewegen können. Zur Vermeidung von eventuellen elektrischen Leckströmen kann ein nichtleitendes Medium bzw. Öl eingesetzt werden.

Im entkuppelten Zustand sind die beweglichen Elemente 4, 4' durch die Federn 6, 6' an die Öffnungen der Gehäusehälften gedrückt bzw. gespannt. Durch die Dichtungen 5, 5' sind die Kupplungshälften 1, 1' abgedichtet, so dass kein Öl aus der Kupplung heraustreten kann. Die elektrischen Anschlüsse 3, 3' sind in Kupplungsrichtung zurückversetzt angeordnet, so dass sie nicht aus den Gehäusen der Kupplungshälften 1, 1' herausstehen.

Wird nun die Kupplung gekuppelt, treffen zunächst die jeweiligen Gehäuse der Kupplungshälften 1, 1' aufeinander, so dass diese durch die Dichtung 5" abgedichtet sind. Erst danach kuppeln die elektrischen Anschlüsse 3, 3', wobei immer noch kein Öl-Luft-Gemisch durch die Kupplung strömt, da dieses durch das jeweilige bewegliche Element 4, 4' und die Dichtungen 5, 5' verhindert wird. Zwischen den elektrischen Anschlüssen und den beweglichen Elementen können insbesondere auch Dichtungen vorgesehen werden, um die elektrischen Anschlüsse vor dem umgebenden Medium bzw. Öl zu schützen. Sind die elektrischen Anschlüsse 3, 3' gekuppelt und werden die Gehäuse der Kupplungshälften 1, 1' weiter in Kupplungsrichtung aufeinander zu bewegt, so bewegt sich das jeweilige bewegliche Element 4, 4' in Richtung des jeweiligen Stegs 8, 8' gegen die Federkraft der jeweiligen Feder 6, 6', so dass zwischen dem jeweiligen beweglichen Element 4, 4' und der jeweiligen Gehäusehälfte eine Passage bzw. ein Durchlass für das Öl-Luft-Gemisch entsteht. Insbesondere ist die Form der jeweiligen Gehäuseöffnung leicht verjüngt, so dass sich nach der Bewegung des beweglichen Element in Richtung des jeweiligen Stegs zwischen beweglichen Element und der Innenwandung der jeweiligen Gehäusehälfte ein Durchlass für das Öl-Luft-Gemisch ergibt. Wahlweise können auch Bohrungen bzw. Aussparung in Kupplungsrichtung im jeweiligen beweglichen Element auf der dem Steg zugewandten Seite des Elements vorgesehen sein, um einen größeren Durchfluss zu gewährleisten. Im Falle des Entkuppelns laufen die oben genannten Vorgänge in umgekehrter Reihenfolge ab.

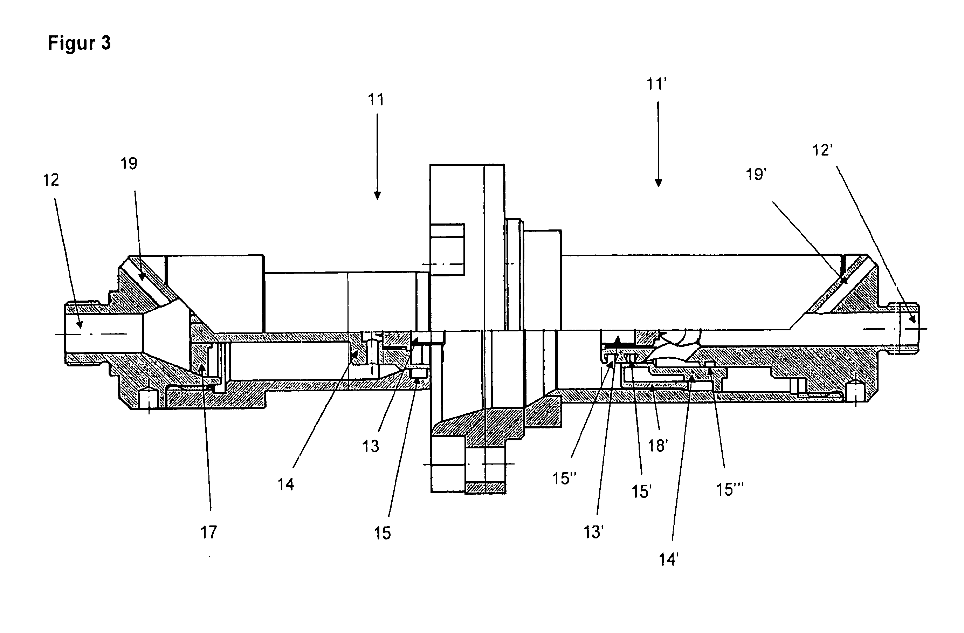

Figur 3 zeigt ein weiteres Ausführungsbeispiel einer Kupplung gemäß der Erfindung. Die Kupplung besteht aus den zwei Kupplungshälften 11, 11', wobei sich an den Enden jeder einzelnen Kupplungshälfte 11, 11' Anschlüsse 12, 12' befinden, an die geeignete Rohre oder Schläuche angeschlossen werden können. Innerhalb jeder Kupplungshälfte 11, 11' befindet sich ein koaxial angeordneter elektrischer Anschluss 13, 13' sowie jeweils ein bewegliches Element 14, 14'. Das Element 14 ist mit dem elektrischen Anschluss 13 verbunden. Dabei kann der Anschluss 13 mit dem Element 14 fest verbunden oder auch beweglich verbunden sein. Der elektrische Anschluss 13 ist in diesem Beispiel als eine Buchse bzw. eine elektrische Kupplung ausgebildet. Der elektrische Anschluss 13' ist ein Stecker. Stecker und Buchse können aber auch vertauscht angeordnet sein. Dichtung 15 dichtet im entkuppelten Zustand der Kupplung die Kupplungshälfte 11 ab. Zwischen dem Kupplungsgehäuse der Kupplungshälfte 11 und dem beweglichen Element 14 kann in diesem Fall kein Öl aus der Kupplung austreten. Die Dichtungen 15' und 15"' dichten im entkuppelten Fall die Kupplungshälfte 11' ab. Zwischen dem beweglichen Element 14' und dem elektrischen Anschluss 13' kann kein Öl aus der Kupplungshälfte austreten.

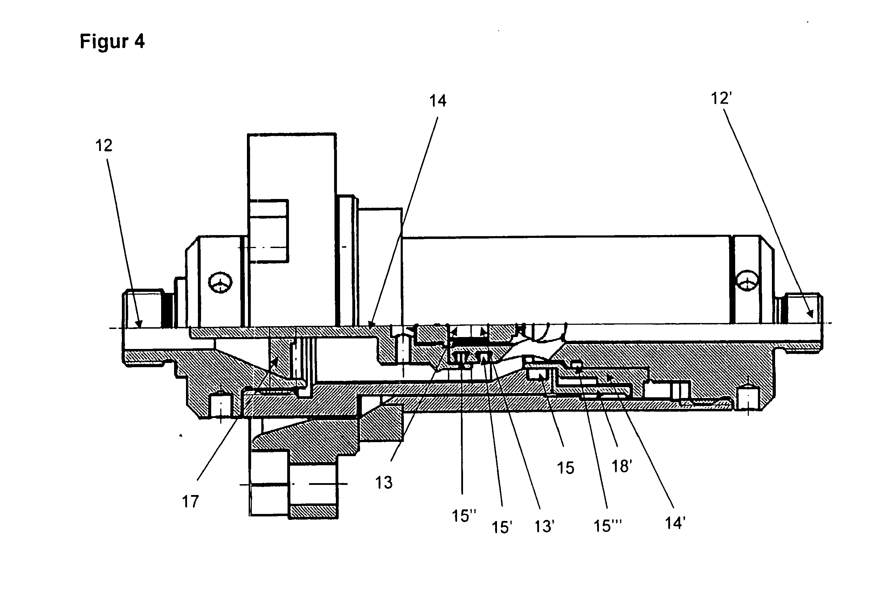

Werden die Kupplungshälften 11, 11' zum Kuppeln aufeinander zu bewegt, berühren sich zunächst die beiden Gehäusehälften. Werden die Kupplungshälften 11, 11' weiter in Kupplungsrichtung bzw. axial aufeinander zu bewegt, dann kuppeln als nächstes die elektrischen Anschlüsse 13, 13'. Werden die Kupplungshälften 11, 11' noch weiter in Kupplungsrichtung aufeinander zu bewegt, dann bewegt sich das bewegliche Element 14 relativ zum Gehäuse der Kupplungshälfte 11 entgegen der Kupplungsrichtung, so dass zwischen dem beweglichen Element 14 und dem Kupplungsgehäuse der Kupplungshälfte 11 ein Durchlass bzw. eine Passage entsteht. Das bewegliche Element 14 kann dabei mittels einer Feder oder anderen elastischen Mitteln axial gespannt sein. Diese ist vorzugsweise durch einen Steg 17 gestützt bzw. gespannt. Der Steg 17 ist im Wesentlichen senkrecht zur Kupplungsrichtung angeordnet und kann vorzugsweise mehrere Durchlassöffnungen für das Öl-Luft-Gemisch aufweisen. Der Steg kann insbesondere die Form eines Quaders oder eines Zylinders, aber auch andere Formen besitzen, wobei ein Teil des beweglichen Elements 14 axial durch eine Öffnung im Steg 17 geführt werden kann, wobei der Steg 17 einen größeren radialen Durchmesser als der Teil des beweglichen Elements 14 besitzt, der durch die Öffnung im Steg 17 bewegt werden kann. Weiterhin wird während des Kuppel-Vorgangs, nachdem die elektrischen Kontakte gekuppelt sind, in der Kupplungshälfte 11' das bewegliche Element 14' durch das Gehäuse der Kupplungshälfte 11 über ein bewegliches Teil 18' in Richtung des Anschlusses 12' bewegt, wodurch sich ein Kanal bzw. ein Durchlass für das Öl-Luft-Gemisch öffnet. Das bewegliche Teil 18' dient unter anderem dazu, die Kraft von dem Gehäuse der Kupplungshälfte 11, auf das bewegliche Element 14' besser zu übertragen. Das jeweilige Kabel, das mit dem jeweiligen elektrischen Anschluss 13, 13' verbunden ist, ist in den Figuren 3 und 4 nicht gezeigt, es wird aber im Wesentlichen zum Einen in der Kupplungshälfte 11 in Kupplungsrichtung vom elektrischen Anschluss 13 durch eine Öffnung im Steg 17 durch die Bohrung 19 geführt und zum Anderen in der Kupplungshälfte 11' vom elektrischen Anschluss 13' im Wesentlichen in Kupplungsrichtung zur Bohrung 19' geführt. Die Bohrungen 19, 19' sind so angeordnet, dass die herausstehenden Kabel wenig Platz in radialer Richtung benötigen. Es ist allerdings auch möglich die Bohrungen 19, 19' im Wesentlich in Kupplungsrichtung, das heißt axial, aus den Gehäusen der Kupplungshälften 11, 11' zu führen. Die Kabel können dabei zum Beispiel in den Bohrungen 19, 19' eingegossen sein, um die Dichtigkeit der Kupplung zu gewährleisten. Die jeweiligen Kabel können aber auch auf andere Arten und Welsen aus dem Gehäuse geführt werden, falls dies erwünscht ist, zum Beispiel auch über Kabelverschraubungen und / oder zur Seite, wie in Figur 2 gezeigt.

Figur 4 zeigt die Kupplung nach dem Ausführungsbeispiel aus Figur 3, jedoch im gekuppelten Zustand. Zu diesem Zustand gelangt man, wenn man wie eben beschrieben vorgeht. Zu sehen ist außerdem, dass die Dichtung 15" die elektrischen Kontakte 13, 13' vor umgebendem Medium bzw. Öl schützt, bevor das Öl aus den Kupplungshälften heraus gelangen kann. Die Dichtungen 15, 15'" dichten das Kupplungsgehäuse nach außen ab und werden wirksam bevor der Durchlass für das Öl-Luft-Gemisch durch die Kupplungshälften 11, 11' geöffnet wird. Zudem ist sichtbar, dass ein Teil des beweglichen Elements 14 durch eine Öffnung des Stegs 17 bewegt ist. In dieser Konfiguration kann das Öl-Luft-Gemisch durch die gekuppelten Kupplungshälften 11, 11' strömen.

Die beschriebenen Kupplungen der Ausführungsbeispiele können vorzugsweise in einer Walzstraße eingesetzt werden, es ist aber auch möglich die beschriebenen Öl-Luft-Kupplungen für andere technische Gebiete zu verwenden. Der radiale Durchmesser der beschriebenen Kupplungen liegt in der Regel unter 100 mm und vorzugsweise zwischen 50 mm und 80 mm. Es ist für gewisse Anwendungen möglich diesen Durchmesser auch größer vorzusehen. Das Material aus dem die Kupplungsgehäuse gefertigt sind ist vorzugsweise Edelstahl, es kann aber auch jedes andere Material verwendet werden, das den auftretenden Drücken des Schmiermittels standhält sowie einen geringen Verschleiß durch die Kuppel- und Entkuppelvorgänge aufweist. Außerdem ist es möglich eine Kupplungshälfte direkt in einem Einbaustück vorzusehen, zum Beispiel in einer entsprechenden Bohrung.

### Bezugszeichenliste

- 1: erste Kupplungshälfte
- 1': zweite Kupplungshälfte
- 2: erster Öl-Luft-Gemisch-Anschluss
- 2': zweiter Öl-Luft-Gemisch-Anschluss
- 3: erster elektrischer Anschluss
- 3': zweiter elektrischer Anschluss
- 4: erstes bewegliches Element
- 4': zweites bewegliches Element
- 5, 5', 5": Dichtungen
- 6, 6': Federn
- 7, 7': Stege
- 8,8': Öffnungen
- 9, 9': Kabelverschraubungen
- 11: erste Kupplungshälfte
- 11': zweite Kupplungshälfte
- 12: erster Öl-Luft-Gemisch-Anschluss
- 12': zweiter Öl-Luft-Gemisch-Anschluss
- 13: erster elektrischer Anschluss
- 13': zweiter elektrischer Anschluss
- 14: erstes bewegliches Element
- 14': zweites bewegliches Element
- 15, 15': Dichtungen
- 15" 15'": Dichtungen
- 17: Steg
- 18': bewegliches Teil
- 19, 19': Bohrungen
- 100: Walze
- 200: Einbaustück
- 300: Einbauposition für Sensor
- 400: Walzenwelle

## Patentansprüche

1. Eine Kupplung für eine Öl-Luft-Schmierung, wobei die Kupplung eine erste Kupplungshälfte (1, 11) mit einem ersten Gehäuse und einer ersten Schlauchverbindung (2, 12) aufweist sowie eine zweite Kupplungshälfte (1', 11') mit einem zweiten Gehäuse und einer zweiten Schlauchverbindung (2', 12'), wobei beide Kupplungshälften (1, 1', 11, 11') miteinander gekoppelt werden können, so dass ein Öl-Luft-Gemisch, das durch die erste Schlauchverbindung (2, 12) strömt, durch die gekuppelten Kupplungshälften (1, 1', 11, 11') in die zweite Schlauchverbindung (2', 12') hineinströmt,
**dadurch gekennzeichnet,**
**dass** zusätzlich ein erster elektrischer Anschluss (3, 13) in der ersten Kupplungshälfte (1, 11) angeordnet ist und ein zweiter elektrischer Anschluss (3', 13') in der zweiten Kupplungshälfte (1', 11') angeordnet ist, die beim Kuppeln der ersten und der zweiten Kupplungshälfte (1, 1', 11, 11') ebenfalls gekuppelt werden, so dass ein elektrischer Strom durch die gekuppelten elektrischen Anschlüsse (3, 3', 13, 13`) fließen kann.

2. Die Kupplung nach Anspruch 1,
wobei jeder elektrische Anschluss (3, 3', 13, 13') konzentrisch innerhalb des Gehäuses der jeweiligen Kupplungshälfte (1,1',11, 11') angeordnet ist.

3. Die Kupplung nach einem der vorhergehenden Ansprüche,
wobei innerhalb des Gehäuses einer der Kupplungshälften (1, 1', 11, 11') ein in Kupplungsrichtung bewegliches Element (4, 4', 14 ,14') vorhanden ist, das mit dem jeweiligen elektrischen Anschluss (3, 3', 13, 13') verbunden ist und
wobei das bewegliche Element (4, 4', 14 ,14') im Fall der entkuppelten Kupplung das Gehäuse der Kupplungshälfte (1, 1', 11, 11') in Kupplungsrichtung abdichtet, so dass kein Öl-Luft-Gemisch aus der Kupplungshälfte (1, 1', 11, 11') herausströmen kann.

4. Die Kupplung nach Anspruch 3,
wobei die elektrischen Anschlüsse (3, 3', 13, 13') in Kupplungsrichtung so angeordnet sind, dass die elektrischen Anschlüsse (3, 3', 13, 13') beim Kuppeln der beiden Kupplungshälften (1, 1`, 11, 11') zuerst gekuppelt werden und erst danach das bewegliche und mit dem jeweiligen elektrischen Anschluss (3, 3', 13, 13') verbundene Element (4, 4', 14 ,14') eine Passage für das Öl-Luft-Gemisch öffnet.

5. Die Kupplung nach Anspruch 4,
wobei die elektrischen Anschlüsse (3, 3', 13, 13') nach deren Kuppeln abgedichtet sind und das bewegliche Element (4, 4', 14 ,14') erst danach die Passage für das Öl-Luft-Gemisch öffnet.

6. Die Kupplung nach einem der Ansprüche 3 bis 5,
wobei in der zweiten Kupplungshälfte (1', 11') ein zweites bewegliches Element (4', 14') vorgesehen ist, welches im Fall der entkuppelten Kupplung das Gehäuse der zweiten Kupplungshälfte (1', 11') in Kupplungsrichtung abdichtet, so dass kein Öl-Luft-Gemisch aus der Kupplungshälfte herausströmen kann.

7. Die Kupplung nach Anspruch 6,
wobei das Gehäuse der ersten Kupplungshälfte (11), beim Kuppeln der ersten und der zweiten Kupplungshälfte (11, 11'), das zweite bewegliche Element (14') der zweiten Kupplungshälfte (11') in Kupplungsrichtung bewegt, so dass sich eine Passage für das Öl-Luft-Gemisch öffnet.

8. Die Kupplung nach einem der vorhergehenden Ansprüche,
wobei die gekuppelte Kupplung um ihre Längsachse drehbar ist.

9. Die Kupplung nach einem der vorhergehenden Ansprüche,
wobei zwischen den elektrischen Anschlüssen (3, 3', 13, 13') und der Innenwand der Gehäuse der Kupplungshälften (1, 1', 11, 11') eine Passage für das Öl-Luft-Gemisch vorhanden ist.

10. Die Kupplung nach einem der vorhergehenden Ansprüche,
wobei mindestens ein elektrischer Anschluss (3, 3', 13, 13') in Längsrichtung bewegbar ist.

11. Die Kupplung nach einem der vorhergehenden Ansprüche,
wobei mindestens einer der elektrischen Anschlüsse (3, 3', 13) durch eine Feder (6, 6') in Kupplungsrichtung gespannt ist, die durch einen Steg (7, 7', 17), der sich im Wesentlichen senkrecht zur Gehäuseinnenwand erstreckt, gehalten wird.

12. Die Kupplung nach Anspruch 6,
wobei der Steg (7, 7', 17) mindestens eine Öffnung für das Öl-Luft-Gemisch aufweist.

13. Die Kupplung nach einem der vorhergehenden Ansprüche,
wobei die elektrischen Anschlüsse (3, 3', 13, 13') mindestens einer Kupplungshälfte (1, 1', 11, 11') in Kupplungsrichtung kürzer ausgebildet sind als die Gehäuse der Kupplungshälften (1, 1', 11, 11'), so dass die Gehäuse der Kupplungshälften (1, 1', 11, 11') miteinander kuppeln bevor die elektrischen Anschlüsse (3, 3', 13, 13') kuppeln.

14. Die Kupplung nach einem der vorhergehenden Ansprüche,
wobei der erste elektrische Anschluss (3, 13) innerhalb der ersten Kupplungshälfte (1, 11) als Stecker ausgebildet ist und der zweite elektrische Anschluss (3', 13') innerhalb der zweiten Kupplungshälfte (1', 11') als eine Buchse.

15. Die Kupplung einem der vorhergehenden Ansprüche,
wobei die elektrischen Leitungen im Wesentlichen parallel zu den Schlauchverbindungen (2, 2', 12, 12') aus der Rückseite der Kupplungsgehäuse herausgeführt werden.

16. Die Kupplung nach Anspruch 15,
wobei die elektrischen Leitungen über eine Kabelverschraubung durch die Gehäuse geführt werden oder mit den Gehäusen vergossen sind.

17. Verfahren zur simultanen Überwachung der Schmierung und Übertragung von Schmiermitteln von Walzen (100) in einer Walzstraße,
wobei Walzenzapfen (400) der Walzen (100) in einem Lager, das in einem Einbaustück (200) angeordnet ist, gelagert sind,
**dadurch gekennzeichnet,**
**dass** in dem Einbaustück (200) eine Bohrung (300) vorgesehen wird und in dieser Bohrung (300) ein Vibrations- und / oder Temperatursensor angeordnet wird, der über ein Kabel mit einer Kupplung nach einem der Ansprüche 1-16 verbunden wird, so dass jeweils das Kuppeln, das Übertragen und das Entkuppeln des Öl-Luft-Gemischs und der elektrischen Ströme durch die Kupplung erfolgt.

## Claims

1. A coupling for an oil/air lubrication, wherein the coupling comprises a first coupling half (1, 11) with a first housing and a first hose connection (2, 12) and a second coupling half (1', 11') with a second housing and a second hose connection (2', 12'), wherein the two coupling halves (1, 1', 11, 11') can be coupled together so that an oil/air mixture, which flows through the first hose connection (2, 12), can flow through the coupling halves (1, 1', 11, 11') into the second hose connection (2', 12'), **characterised in that** in addition a first electrical connection (3, 13) is arranged in the first coupling half (1, 11) and a second electrical coupling (3, 13) is arranged in the second coupling half (1', 11'), which electrical connections on coupling of the first and second coupling halves (1, 1', 11, 11') are similarly coupled so that an electrical current can flow through the coupled electrical connections (3, 3', 13, 13').

2. The coupling according to claim 1, wherein each electrical connection (3, 3', 13, 13') is arranged concentrically within the housing of the respective coupling half (1, 1', 11, 11').

3. The coupling according to one of the preceding claims, wherein an element (4, 4', 14, 14') movable in coupling direction is present within the housing of one of the coupling halves (1, 1', 11, 11') and is connected with the respective electrical connection (3, 3', 13, 13') and wherein the movable element (4, 4', 14, 14') in the case of the coupling being decoupled seals the housing of the coupling half (1, 1', 11, 11') in coupling direction so that no oil/air mixture can flow out of the coupling half (1, 1', 11, 11').

4. The coupling according to claim 3, wherein the electrical connections (3, 3', 13, 13') are so arranged in coupling direction that the electrical connections (3, 3', 13, 13') are coupled first when the two coupling halves (1, 1', 11, 11') are coupled and only thereafter the movable element (4, 4', 14, 14') connected with the respective electrical connection (3, 3', 13, 13') opens a passage for the oil/air mixture.

5. The coupling according to claim 4, wherein the electrical connections (3, 3', 13, 13') are sealed after coupling thereof and the movable element (4, 4', 14, 14') only thereafter opens the passage for the oil/air mixture.

6. The coupling according to any one of claims 3 to 5, wherein provided in the second coupling half (1', 11') is a second movable element (4', 14') which in the case of the coupling being decoupled seals the housing of the second coupling half (1', 11') in coupling direction so that no oil/air mixture can flow out of the coupling half.

7. The coupling according to claim 6, wherein the housing of the first coupling half (11) on coupling of the first and second coupling halves (11, 11') moves the second movable element (14') of the second coupling half (11') in coupling direction so that a passage for the oil/air mixture opens.

8. The coupling according to any one of the preceding claims, wherein the coupled coupling is rotatable about its longitudinal axis.

9. The coupling according to any one of the preceding claims, wherein a passage for the oil/air mixture is present between the electrical connections (3, 3', 13, 13') and the inner wall of the housing of the coupling halves (1, 1', 11, 11').

10. The coupling according to any one of the preceding claims, wherein at least one electrical connection (3, 3', 13, 13') is movable in longitudinal direction.

11. The coupling according to any one of the preceding claims, wherein at least one of the electric connections (3, 3', 13) is stressed by a spring (6, 6') in coupling direction, which is held by a web (7, 7', 17) which extends substantially perpendicularly to the housing inner wall.

12. The coupling according to claim 6, wherein the web (7, 7', 17) has at least one opening for the oil/air mixture.

13. The coupling according to any one of the preceding claims, wherein the electrical connections (3, 3', 13, 13') of at least one coupling half (1, 1', 11, 11') are constructed to be shorter in coupling direction than the housings of the coupling halves (1, 1', 11, 11') so that the housings of the coupling halves (1, 1', 11, 11') are coupled together before the electrical connections (3, 3', 13, 13') are coupled.

14. The coupling according to any one of the preceding claims, wherein the first electrical connection (3, 13) within the first coupling half (1, 11) is constructed as a plug and the second electrical connection (3', 13') within the second coupling half (1', 11') is constructed as a bush.

15. The coupling according to any one of the preceding claims, wherein the electrical lines are led substantially parallel to the housing connections (2, 2', 12, 12') out of the rear side of the coupling housings.

16. The coupling according to claim 15, wherein the electrical lines are led through the housing by way of a cable screw connection or are moulded with the housings.

17. Method for simultaneous monitoring of the lubrication and transfer of lubricants from rolls (100) in a rolling train, wherein roll pins (400) of the rolls (100) are mounted in a bearing arranged in a chock (200), **characterised in that** a bore (300) is provided in the chock (200) and a vibration and/or temperature sensor is arranged in this bore (300) and is connected by way of a cable with a coupling according to any one of claims 1 to 16 so that in each instance the coupling together, transfer and uncoupling of the oil/air mixture and the electrical currents takes place through the coupling.

## Revendications

1. Accouplement pour une lubrification huile-air, l'accouplement présentant une première moitié (1, 11) d'accouplement dotée d'un premier carter et d'un premier raccord (2, 12) de flexible ainsi qu'une deuxième moitié (1', 11') d'accouplement dotée d'un deuxième carter et d'un deuxième raccord (2', 12') de flexible, les deux moitiés (1, 1', 11, 11') d'accouplement pouvant être accouplées l'une à l'autre de manière telle qu'un mélange huile-air qui s'écoule dans le premier raccord (2, 12) de flexible s'écoule via les moitiés (1, 1', 11, 11') d'accouplement accouplées dans le deuxième raccord (2', 12') de flexible, **caractérisé en ce qu'**en plus un premier raccord électrique (3, 13) est disposé dans la première moitié (1, 11) d'accouplement et un deuxième raccord électrique (3', 13') est disposé dans la deuxième moitié (1', 11') d'accouplement, qui sont également accouplés lors de l'accouplement de la première et de la deuxième (1, 1 11, 11') moitié d'accouplement de telle sorte qu'un courant électrique peut s'écouler dans les raccords électriques (3, 3', 13, 13') accouplés.

2. Accouplement selon la revendication 1, chaque raccord électrique (3, 3', 13, 13') étant disposé concentriquement dans le carter de chaque moitié (1,1',11 ,11') d'accouplement.

3. Accouplement selon l'une quelconque des revendications précédentes, un élément (4, 4', 14, 14') mobile dans le sens de l'accouplement se trouvant dans le carter d'une des moitiés (1, 1', 11, 11') d'accouplement et étant relié au raccord électrique respectif (3, 3', 13, 13') et l'élément mobile (4, 4', 14 ,14'), dans le cas d'un accouplement découplé, fermant le carter de la moitié (1, 1', 11, 11') d'accouplement dans le sens d'accouplement de telle sorte que le mélange huile-air ne peut pas s'écouler hors de la moitie (1, 1', 11, 11') d'accouplement.

4. Accouplement selon la revendication 3, les raccords électriques (3, 3', 13, 13') étant disposés dans le sens de l'accouplement de manière telle que les raccords électriques (3, 3', 13, 13') sont d'abord accouplés lors de l'accouplement des deux moitiés (1, 1', 11, 11') d'accouplement, puis seulement l'élément (4, 4', 14, 14') mobile et relié au raccord électrique respectif (3, 3', 13, 13') ouvre un passage pour le mélange huile-air.

5. Accouplement selon la revendication 4, les raccords électriques (3, 3', 13, 13') étant fermés après leur accouplement et l'élément (4, 4', 14, 14') mobile n'ouvrant qu'ensuite le passage pour le mélange huile-air.

6. Accouplement selon l'une quelconque des revendications 3 à 5, un deuxième élément (4', 14') mobile étant prévu dans la deuxième moitié (1', 11') d'accouplement, qui ferme, dans le cas d'un accouplement désaccouplé, le carter de la deuxième moitié (1', 11') d'accouplement dans le sens de l'accouplement, de telle sorte que le mélange huile-air ne peut pas s'écouler hors de la moitié d'accouplement.

7. Accouplement selon la revendication 6, le carter de la première moitié (11) d'accouplement, lors de l'accouplement de la première et de la deuxième moitié (11, 11') d'accouplement, déplaçant le deuxième élément (14') mobile de la deuxième moitié (11') d'accouplement dans le sens d'accouplement, de telle sorte qu'un passage pour le mélange huile-air s'ouvre.

8. Accouplement selon l'une quelconque des revendications précédentes, l'accouplement accouplé pouvant être tourné autour de son axe longitudinal.

9. Accouplement selon l'une quelconque des revendications précédentes, un passage pour le mélange huile-air existant entre les raccords électriques (3, 3', 13, 13') et la paroi interne du carter des moitiés (1, 1', 11, 11') d'accouplement.

10. Accouplement selon l'une quelconque des revendications précédentes, au moins un raccord électrique (3, 3', 13, 13') étant mobile dans le sens longitudinal.

11. Accouplement selon l'une quelconque des revendications précédentes, au moins un des raccords électriques (3, 3', 13) étant tendu par un ressort (6, 6') dans le sens d'accouplement, qui est maintenu par une âme (7, 7', 17), qui s'étend de manière sensiblement perpendiculaire à la paroi interne du carter.

12. Accouplement selon la revendication 6, l'âme (7, 7', 17) présentant au moins une ouverture pour le mélange huile-air.

13. Accouplement selon l'une quelconque des revendications précédentes, les raccords électriques (3, 3', 13, 13') d'au moins une moitié (1, 1', 11, 11') d'accouplement étant conçus plus courts dans le sens de l'accouplement que les carters des moitiés (1, 1', 11, 11') d'accouplement, de telle sorte que les carters des moitiés (1, 1', 11, 11') d'accouplement peuvent s'accoupler l'un à l'autre avant que les raccords électriques (3, 3', 13, 13') s'accouplent.

14. Accouplement selon l'une quelconque des revendications précédentes, le premier raccord électrique (3, 13) dans la première moitié (1, 11) d'accouplement étant conçu sous forme de prise mâle et le deuxième raccord électrique (3', 13') dans la deuxième moitié (1', 11') d'accouplement sous forme de prise femelle.

15. Accouplement selon l'une quelconque des revendications précédentes, les conducteurs électriques étant évacués de manière sensiblement parallèle aux raccords (2, 2', 12, 12') de flexible par la face arrière du carter de l'accouplement.

16. Accouplement selon la revendication 15, les conducteurs électriques étant guidés via un presse-étoupe au travers du carter ou étant coulés avec les carters.

17. Procédé pour la surveillance simultanée de la lubrification et du transfert de lubrifiants de cylindres (100) dans un laminoir, les tourillons (400) des cylindres (100) étant logés dans un palier qui est disposé dans une empoise (200), **caractérisé en ce qu'**un trou (300) est prévu dans l'empoise (200) et un capteur de vibrations et/ou de température est disposé dans ce trou (300), qui est relié via un câble à un accouplement selon l'une quelconque des revendications 1-16 de telle sorte qu'à chaque fois l'accouplement, le transfert et le désaccouplement du mélange huile-air et des courants électriques ont lieu via l'accouplement.
